# EUROPÄISCHE PATENTSCHRIFT

(11) **EP 3 298 462 B1**
(45) Veröffentlichungstag und Bekanntmachung des Hinweises auf die Patenterteilung: **27.10.2021**
(21) Anmeldenummer: 16744311.8
(22) Anmeldetag: 05.07.2016
(51) Int. Cl.: B60W 30/095, B60W 50/12, B60W 50/00, G05B 7/02, B62D 15/02, B60W 30/09, G05D 1/00

(54) **VERFAHREN UND ASSISTENZSYSTEM ZUM STEUERN EINES TECHNISCHEN SYSTEMS**
METHOD AND ASSISTANCE SYSTEM FOR CONTROLLING A TECHNICAL SYSTEM
PROCÉDÉ ET SYSTÈME D'ASSISTANCE POUR COMMANDER UN SYSTÈME TECHNIQUE

(30) Priorität: 21.07.2015 DE 102015213705
(43) Veröffentlichungstag der Anmeldung: 28.03.2018
(73) Patentinhaber: Siemens Aktiengesellschaft, 80333 München (DE)
(72) Erfinder: EIDENBERGER, Robert, 81539 München (DE); NEUBAUER, Werner, 81739 München (DE)
(86) Internationale Anmeldenummer: PCT/EP2016/065783
(87) Internationale Veröffentlichungsnummer: WO 2017/012856

(56) Entgegenhaltungen:
- EP-A2- 1 990 250
- WO-A1-2012/010365
- DE-A1-102008 040 241

## Beschreibung

Technische Systeme, die von einem oder mehreren Benutzern manuell gesteuert werden, können durch Fehlbedienungen oder andere Einflüsse in ungültige, unerwünschte und/oder unzulässige Zustände gelangen. Zur Vermeidung derartiger Zustände weisen zeitgemäße technische Systeme häufig ein Assistenzsystem auf, das durch Übernahme der Steuerung in kritischen Fällen einen Übergang in diese Zustände verhindern soll. Beispiele für derartige Assistenzsysteme sind etwa eine Antischlupfregelung oder eine Kollisionsvermeidung bei Kraftfahrzeugen oder eine Kollisionsvermeidung bei Baggern oder Kranen.

Häufig übernimmt ein Assistenzsystem bei Erreichen oder kurz vor Erreichen von kritischen Zuständen vollständig die Steuerung. In diesen Fällen verbleiben einem Benutzer während der Dauer der Übernahme keine oder nur beschränkte Eingriffsmöglichkeiten. Wenn am Ende der Übernahme durch das Assistenzsystem die Kontrolle wieder an den Benutzer zurückgegeben wird, kann indes ein für den Benutzer ruckartiges Verhalten des technischen Systems auftreten. Ein solches ruckartiges Verhalten kann den Benutzer überraschen und eine Fehlbedienung des technischen Systems bedingen.

Es ist Aufgabe der vorliegenden Erfindung, ein Verfahren sowie ein Assistenzsystem zum Steuern eines technischen Systems anzugeben, die für einen Benutzer besser bedienbar sind.

EP 1 990 250 A2 mit der Bezeichnung: "Vehicle running control method for avoiding that a vehicle collides with an obstacle" offenbart ebenfalls Lösungen die ein ruckartiges Verhalten im Zusammenhang mit kritischen Situationen beim Fahrbetrieb vermeiden.

Gelöst wird diese Aufgabe durch ein Verfahren mit den Merkmalen des Patentanspruches 1, durch ein Assistenzsystem mit den Merkmalen des Patentanspruches 13, durch ein Computerprogrammprodukt mit den Merkmalen des Patentanspruches 14, sowie durch ein computerlesbares Speichermedium mit den Merkmalen des Patentanspruches 15.

Erfindungsgemäß ist vorgesehen, zum Steuern eines technischen Systems eine Benutzer-Stellgröße einzulesen und eine Vielzahl von Stellgrößenvarianten der Benutzer-Stellgröße zu generieren. Die Benutzer-Stellgröße kann hierbei z.B. von einem analogen Eingabegerät, wie beispielsweise einem Joystick, einem Gaspedal, einem Lenkrad etc. eingelesen werden. Ferner wird eine jeweilige Trajektorie des technischen Systems extrapoliert und zwar jeweils für ein Steuern des technischen Systems durch die Benutzer-Stellgröße sowie für ein Steuern durch eine jeweilige Stellgrößenvariante. Weiterhin wird eine Zulässigkeit der extrapolierten Trajektorien bewertet. Als Bewertungskriterium kann hierbei z.B. ein mögliches oder hinreichend wahrscheinliches Erreichen eines kritischen Systemzustandes, beispielsweise die Möglichkeit einer Kollision, angewandt werden. Darüber hinaus wird ein jeweiliger Abstand einer jeweiligen Stellgrößenvariante zur Benutzer-Stellgröße ermittelt. Die Benutzer-Stellgröße wird dann als Steuersignal selektiert, falls die für die Benutzer-Stellgröße extrapolierte Trajektorie als zulässig bewertet wird. Andernfalls wird aus den Stellgrößenvarianten mit als zulässig bewerteter extrapolierter Trajektorie eine Stellgrößenvariante als Steuersignal selektiert, wobei eine Stellgrößenvariante mit geringerem Abstand bevorzugt selektiert wird. Schließlich wird das Steuersignal zum Steuern des technischen Systems ausgegeben.

Ein erfindungsgemäßes Assistenzsystem ist eingerichtet zum Ausführen des vorstehenden Verfahrens.

Ein wesentlicher Vorteil der Erfindung ist darin zu sehen, dass dem Benutzer bei Übernahme der Kontrolle durch das Assistenzsystem dennoch eine gewisse Restkontrolle über das technische System verbleibt, da sich die selektierte Stellgröße an der jeweils aktuellen Benutzer-Stellgröße orientiert. Weiterhin kann ein ruckartiges Verhalten bei der Rückgabe der Kontrolle an den Benutzer vermieden oder zumindest verringert werden.

Vorteilhafte Ausführungsformen und Weiterbildungen der Erfindung sind in den abhängigen Ansprüchen angegeben.

Nach einer vorteilhaften Ausführungsform der Erfindung kann aus den Stellgrößenvarianten mit als zulässig bewerteter extrapolierter Trajektorie eine Stellgrößenvariante mit minimalem Abstand als Steuersignal selektiert werden. Dies erlaubt eine gewissermaßen maximale Restkontrolle des Benutzers über das technische System, insofern die selektierte Stellgröße minimal von der Benutzer-Stellgröße abweicht.

Weiterhin kann für die Ermittlung des Abstandes zwischen einer Stellgrößenvariante und der Benutzer-Stellgröße eine vorgegebene Abstands-Metrik verwendet werden. Die Abstands-Metrik kann hierbei auch einen Abstand der aus der Stellgrößenvariante und der Benutzer-Stellgröße extrapolierten Trajektorien berücksichtigen.

Insbesondere können die Stellgrößenvarianten in einem durch die Abstands-Metrik bestimmten Bereich um die Benutzer-Stellgröße generiert werden. Vorzugsweise kann der Bereich durch einen vorgegebenen Maximalabstand zur Benutzer-Stellgröße definiert sein. Auf diese Weise können Stellgrößenvarianten ausgeschlossen werden, die zu einer nicht akzeptablen Unstetigkeit im Systemverhalten des technischen Systems bei Übernahme oder Rückgabe der Kontrolle führen würden.

Innerhalb des vorgegebenen Bereichs können die Stellgrößenvarianten mittels eines Zufallsprozesses ausgewählt werden.

Ferner können als Stellgrößenvarianten zeitabhängige Funktionen generiert werden. Eine derartige zeitabhängige Funktion kann z.B. als ein Stellgrößenverlauf und/oder als eine zeitlich aufgelöste Stellgrößensequenz generiert werden. Auf diese Weise können auch komplexe Steuersequenzen bei der Extrapolation, Bewertung und/oder Selektion der Trajektorien und/oder Stellgrößen berücksichtigt werden. Vorteilhafterweise können die Stellgrößenvarianten aus einer Datenbank mit häufigen Steuermustern, vorzugsweise benutzerspezifischen Steuermustern ausgewählt werden.

Weiterhin kann eine Anzahl der zu generierenden Stellgrößenvarianten abhängig von einer aktuell verfügbaren Rechenleistung bestimmt werden. Auf diese Weise kann ein zur Durchführung des Verfahrens erforderlicher Rechenaufwand an die verfügbare Rechenleistung angepasst werden. In der Regel kann so gewährleistet werden, dass die Steuerung ein gebotenes Echtzeiterfordernis einhält.

Erfindungsgemäss erfolgt das Generieren der Stellgrößenvarianten, das zeitliche Extrapolieren der Trajektorien, das Bewerten der Zulässigkeit der Trajektorien, das Ermitteln der Abstände und/oder das Selektieren des Steuersignals fortlaufend.

Nach einer vorteilhaften Ausführungsform der Erfindung kann die Extrapolation der Trajektorien anhand eines Systemmodells des technischen Systems erfolgen. Insbesondere können die Trajektorien extrapoliert werden, indem ein Systemverhalten des technischen Systems anhand des Systemmodells simuliert wird.

Darüber hinaus kann ein Betriebsparameter und/oder Umgebungsparameter des technischen Systems erfasst werden. Die Extrapolation der Trajektorien kann dann abhängig von dem erfassten Betriebsparameter und/oder Umgebungsparameter erfolgen. Als Betriebsparameter oder Umgebungsparameter können z.B. eine Fahrzeuggeschwindigkeit, eine Fahrbahnbeschaffenheit, eine Außentemperatur und/oder andere Wetter- oder Umgebungsverhältnisse erfasst und bei der Extrapolation berücksichtigt werden.

Weiterhin kann die Extrapolation einer jeweiligen Trajektorie bis zu einer Extrapolationsgrenze erfolgen, die abhängig von einem erfassten Betriebsparameter und/oder Umgebungsparameter dynamisch ermittelt werden kann.

Insbesondere kann die Extrapolationsgrenze derart ermittelt werden, dass das technische System innerhalb der Extrapolationsgrenze in einen sicheren Systemzustand steuerbar ist.

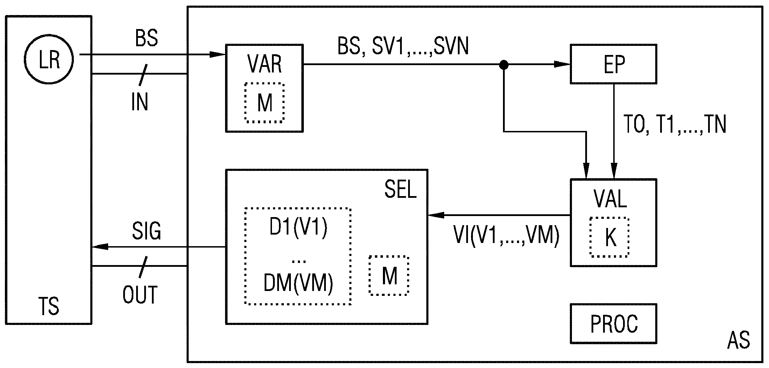

Ein Ausführungsbeispiel der Erfindung wird nachfolgend anhand der Zeichnung näher erläutert.

Die Figur zeigt in schematischer Darstellung ein erfindungsgemäßes Assistenzsystem beim Steuern eines technischen Systems.

In der Figur ist ein interaktives Assistenzsystem AS zum Steuern eines technischen Systems TS schematisch dargestellt. Das technische System TS kann z.B. ein Kraftfahrzeug, ein Bagger, ein Kran oder ein anderes von einem Benutzer zu steuerndes System sein. Insbesondere kann das erfindungsgemäße Assistenzsystems AS auch Teil des technischen Systems TS sein. Zur Steuerung des technischen Systems TS durch einen Benutzer sei im vorliegenden Ausführungsbeispiel ein Lenkrad LR als analoges Eingabegerät vorgesehen. Alternativ oder zusätzlich kann als Eingabegerät auch ein Joystick, ein Gaspedal, ein Bremspedal etc. vorgesehen sein.

Das Assistenzsystem AS verfügt über eine Eingabeschnittstelle IN zum technischen System TS, über die fortlaufend eine aktuelle Benutzer-Stellgröße BS vom Lenkrad LR eingelesen wird. Die Benutzer-Stellgröße BS kann innerhalb eines vorgegebenen Wertebereiches z.B. einen Drehwinkel des Lenkrades LR angeben. Alternativ oder zusätzlich kann die Benutzer-Stellgröße BS auch ein ein- oder mehrkomponentiger Stellgrößen-Vektor sein, der z.B. von einem mehrachsigen Joystick eingelesen wird.

Die Benutzer-Stellgröße BS wird zu einem Variationsmodul VAR des Assistenzsystems AS übermittelt. Das Variationsmodul VAR dient zum fortlaufenden Generieren einer Vielzahl von Stellgrößenvarianten SV1, ..., SVN der aktuell eingelesenen Benutzer-Stellgröße BS. Die Stellgrößenvarianten SV1,...,SVN können hierbei insbesondere auch die aktuelle Benutzer-Stellgröße BS umfassen. Die Stellgrößenvarianten SV1,...,SVN werden in einem von der Benutzer-Stellgröße BS abhängigen Wertebereich um die Benutzer-Stellgröße BS generiert. Dieser Wertebereich umfasst vorzugsweise Stellgrößenwerte, die sich bezüglich eines Abstandsmaßes, vorzugsweise einer Abstands-Metrik M, in der Nähe der Benutzer-Stellgröße BS befinden. So kann der Wertebereich z.B. Stellgrößenwerte innerhalb eines vorgegebenen Maximalabstandes zur aktuellen Benutzer-Stellgröße BS umfassen. Innerhalb des Wertebereiches können die Stellgrößenvarianten SV1,...,SVN abhängig von einem Zufallsprozess generiert werden. Darüber hinaus können die Stellgrößenvarianten SV1,...,SVN auch als zeitabhängige Funktionen, d.h. als zeitlich variierende Stellgrößenfunktionen generiert werden. Weiterhin können Stellgrößenvarianten aus einer Datenbank mit häufigen Steuermustern, vorzugsweise benutzerspezifischen Steuermustern ausgelesen werden. Eine Anzahl N der generierten Stellgrößenvarianten SV1,...,SVN kann abhängig von einer aktuell verfügbaren Rechenleistung eines die Verfahrensschritte des Assistenzsystems AS ausführenden Prozessors PROC bestimmt werden.

Die aktuelle Benutzer-Stellgröße BS sowie die daraus generierten Stellgrößenvarianten SV1,...,SVN werden vom Variationsmodul VAR zu einem Extrapolationsmodul EP des Assistenzsystems AS sowie zu einem Bewertungsmodul VAL des Assistenzsystems AS übermittelt.

Das Extrapolationsmodul EP dient zum fortlaufenden Extrapolieren von Trajektorien T0,T1,...,TN des technischen Systems TS. Derartige Trajektorien sind Bahnkurven des technischen Systems TS oder eines Teils davon in einem Zustandsraum des technischen Systems TS, z.B. eine räumliche Bahnkurve eines Kraftfahrzeugs, einer Baggerschaufel oder eines Kranauslegers. Die Extrapolation der Trajektorien T0,T1,...,TN kann räumlich, zeitlich oder in einer anderen Richtung des Zustandsraums ausgeführt werden.

Das Extrapolationsmodul EP berechnet und/oder simuliert ein Systemverhalten des technischen Systems TS oder eines Teils davon für die Benutzer-Stellgröße BS sowie für alle Stellgrößenvarianten SV1,...,SVN. D.h. das Systemverhalten wird jeweils unter der Voraussetzung ermittelt, dass das technische System TS durch die Benutzer-Stellgröße BS bzw. durch eine jeweilige Stellgrößenvariante SV1,...,SVN gesteuert wird. Ein solches Systemverhalten kann z.B. einen Bremsweg oder ein Ausweichmanöver eines Kraftfahrzeugs betreffen. Gegebenenfalls verfügt das Extrapolationsmodul EP über ein Simulationsmodul zum Simulieren des Systemverhaltens des technischen Systems TS anhand eines Systemmodells des technischen Systems TS.

Vorzugsweise werden zur Berechnung des Systemverhaltens Betriebsparameter und/oder Umgebungsparameter des technischen Systems TS erfasst, z.B. eine Fahrzeuggeschwindigkeit, eine Fahrbahnbeschaffenheit, eine Außentemperatur und/oder andere Wetter- oder Umgebungsverhältnisse. Die Extrapolation der Trajektorien T0,T1,...,TN erfolgt dann abhängig von den erfassten Betriebsparametern und/oder Umgebungsparametern. Auf diese Weise kann z.B. ein Bremsweg als umso länger berechnet werden, je höher die Fahrzeuggeschwindigkeit ist. Auch Regen oder Glätte können so bei der Extrapolation berücksichtigt werden.

Für das vorliegende Ausführungsbeispiel sei T0 die extrapolierte Trajektorie des technischen Systems TS beim Steuern des technischen Systems TS durch die Benutzer-Stellgröße BS. Entsprechend sei T1,... bzw. TN jeweils eine extrapolierte Trajektorie des technischen Systems TS beim Steuern des technischen Systems TS durch die jeweilige Stellgrößenvariante SV1,... bzw. SVN.

Die Trajektorien T0,T1,...,TN werden durch das Extrapolationsmodul EP jeweils bis zu einer dynamisch ermittelten Extrapolationsgrenze extrapoliert. Eine solche Extrapolationsgrenze wird häufig auch als Look-Ahead bezeichnet. Die Extrapolationsgrenze wird vorzugsweise abhängig von erfassten Betriebsparametern und/oder Umgebungsparametern fortlaufend dynamisch ermittelt und zwar derart, dass das technische System TS innerhalb des Extrapolationsbereiches in einen sicheren Systemzustand steuerbar ist. So vergrößern sich z.B. bei einem Kraftfahrzeug der Bremsweg und die Bremszeit mit steigender Geschwindigkeit, so dass die Extrapolationsgrenze in diesem Fall zeitlich und/oder räumlich derart erhöht wird, dass das Kraftfahrzeug innerhalb des Extrapolationsbereiches zum Stehen gebracht werden kann.

Die extrapolierten Trajektorien T0,T1,...,TN werden vom Extrapolationsmodul EP zum Bewertungsmodul VAL übermittelt. Das Bewertungsmodul VAL bewertet eine Zulässigkeit für jede der extrapolierten Trajektorien T0,T1,...,TN anhand eines vorgegebenen Bewertungskriteriums K. Als Bewertungskriterium K kann z.B. ein mögliches oder hinreichend wahrscheinliches Erreichen eines kritischen Systemzustandes, beispielsweise die Möglichkeit einer Kollision, angewandt werden. Als Ergebnis dieser Bewertung erzeugt das Bewertungsmodul VAL eine Zulässigkeitsinformation VI, die z.B. angibt, welche der Stellgrößen BS und SV1,...,SVN zu einer zulässigen Trajektorie führen. Als zulässig können hierbei diejenigen Trajektorien aufgefasst werden, bei denen innerhalb des Extrapolationsbereichs kein kritischer Systemzustand auftritt. Im vorliegenden Ausführungsbeispiel enthält die Zulässigkeitsinformation VI diejenigen Stellgrößen V1,...,VM aus einer die Benutzer-Stellgröße BS und die Stellgrößenvarianten SV1,...,SVN umfassenden Menge, die zu einer zulässigen Trajektorie führen. Die Zulässigkeitsinformation VI wird vom Bewertungsmodul VAL zu einem Selektionsmodul SEL des Assistenzsystems AS übermittelt.

Durch das Selektionsmodul SEL wird aus den Stellgrößen V1,...,VM mit zulässiger Trajektorie eine Stellgröße selektiert und als Steuersignal SIG zum Steuern des technischen Systems TS ausgegeben.

Im Rahmen der Selektion wird durch das Selektionsmodul SEL zunächst anhand der Zulässigkeitsinformation VI geprüft, ob die Benutzer-Stellgröße BS zu einer zulässigen Trajektorie führt. Im vorliegenden Ausführungsbeispiel kann hierzu geprüft werden, ob die Benutzer-Stellgröße BS in der Zulässigkeitsinformation VI enthalten ist. Falls dies zutrifft, wird die Benutzer-Stellgröße BS als Steuersignal SIG selektiert.

Falls die Benutzer-Stellgröße BS dagegen zu einer unzulässigen Trajektorie führt, selektiert das Selektionsmodul SEL stattdessen eine der Stellgrößen V1,...,VM, die zu einer zulässigen Trajektorie führen, als Steuersignal SIG. Zu diesem Zweck ermittelt das Selektionsmodul SEL für alle Stellgrößen V1,...,VM Abstände D1(V1),...,DM(VM) der Stellgrößen V1,...,VM zur Benutzer-Stellgröße BS bezüglich der vorgegebenen Abstands-Metrik M. Die Abstands-Metrik M kann z.B. einen euklidischen Abstand in einem Zustandsraum für Stellgrößen des technischen Systems TS darstellen. Darüber hinaus kann die Abstands-Metrik M auch abhängig von einem Abstand zwischen den aus den betreffenden Stellgrößen extrapolierten Trajektorien sein. Anschließend wird diejenige Stellgröße von den Stellgrößen V1,...,VM als Steuersignal SIG selektiert, die einen minimalen Abstand zur Benutzer-Stellgröße BS aufweist. Schließlich wird das selektierte Steuersignal SIG über eine Ausgabeschnittstelle OUT des technischen Systems TS zum Steuern des technischen Systems TS ausgegeben.

Durch das erfindungsgemäße Assistenzsystem AS kann eine Restkontrolle des Benutzers über das technische System TS auch bei Übernahme der Kontrolle durch das Assistenzsystem AS bewahrt werden, da sich die vom Assistenzsystem AS selektierte Stellgröße an der jeweils aktuellen Benutzer-Stellgröße BS orientiert. Auf diese Weise kann ein ruckartiges Verhalten bei der Rückgabe der Kontrolle an den Benutzer vermieden oder zumindest verringert werden.

## Patentansprüche

1. Verfahren für ein Assistenzsystem (AS) zum Steuern eines technischen Systems (TS), wobei
a) eine Benutzer-Stellgröße (BS) zum Steuern des technischen Systems (TS) eingelesen wird,
b) eine Vielzahl von Stellgrößenvarianten (SV1,...,SVN) der Benutzer-Stellgröße (BS) generiert wird,
c) eine jeweilige Trajektorie (T0,T1,...,TN) des technischen Systems (TS) extrapoliert wird jeweils für ein Steuern des technischen Systems durch die Benutzer-Stellgröße (BS) sowie für ein Steuern durch eine jeweilige Stellgrößenvariante (SV1,...,SVN),
d) eine Zulässigkeit der extrapolierten Trajektorien (T0,T1,...,TN) bewertet wird,
e) ein jeweiliger Abstand einer jeweiligen Stellgrößenvariante (SV1,...,SVN) zur Benutzer-Stellgröße (BS) ermittelt wird,
f) die Benutzer-Stellgröße (BS) als Steuersignal (SIG) selektiert wird, falls die für die Benutzer-Stellgröße (BS) extrapolierte Trajektorie (T0) als zulässig bewertet wird, und andernfalls
aus den Stellgrößenvarianten mit als zulässig bewerteter extrapolierter Trajektorie eine Stellgrößenvariante als Steuersignal (SIG) selektiert wird, wobei eine Stellgrößenvariante mit geringerem Abstand bevorzugt selektiert wird,
g) das Steuersignal (SUG) zum Steuern des technischen Systems (TS) ausgegeben wird, und
h) das Generieren der Stellgrößenvarianten (SV1,...,SVN), das zeitliche Extrapolieren der Trajektorien (T0,T1,...,TN), das Bewerten der Zulässigkeit der Trajektorien (T0,T1,...,TN), das Ermitteln der Abstände und/oder das Selektieren des Steuersignals (SIG) fortlaufend erfolgt.

2. Verfahren nach Anspruch 1, **dadurch gekennzeichnet, dass** aus den Stellgrößenvarianten mit als zulässig bewerteter extrapolierter Trajektorie eine Stellgrößenvariante mit minimalem Abstand als Steuersignal (SIG) selektiert wird.

3. Verfahren nach einem der vorhergehenden Ansprüche, **dadurch gekennzeichnet, dass**
für die Ermittlung des Abstandes zwischen einer Stellgrößenvariante (SV1,...,SVN) und der Benutzer-Stellgröße (BS) eine vorgegebene Abstands-Metrik (M) verwendet wird.

4. Verfahren nach Anspruch 3, **dadurch gekennzeichnet, dass** die Stellgrößenvarianten (SV1,...,SVN) in einem durch die Abstands-Metrik (M) bestimmten Bereich um die Benutzer-Stellgröße (BS) generiert werden.

5. Verfahren nach Anspruch 4, **dadurch gekennzeichnet, dass** die Stellgrößenvarianten (SV1,...,SVN) innerhalb des vorgegebenen Bereichs mittels eines Zufallsprozesses ausgewählt werden.

6. Verfahren nach einem der vorhergehenden Ansprüche, **dadurch gekennzeichnet, dass**
als Stellgrößenvarianten (SV1,...,SVN) zeitabhängige Funktionen generiert werden.

7. Verfahren nach einem der vorhergehenden Ansprüche, **dadurch gekennzeichnet, dass**
die Stellgrößenvarianten (SV1,...,SVN) aus einer Datenbank mit häufigen Steuermustern ausgewählt werden.

8. Verfahren nach einem der vorhergehenden Ansprüche, **dadurch gekennzeichnet, dass**
eine Anzahl der zu generierenden Stellgrößenvarianten (SV1,...,SVN) abhängig von einer aktuell verfügbaren Rechenleistung bestimmt wird.

9. Verfahren nach einem der vorhergehenden Ansprüche, **dadurch gekennzeichnet, dass**
die Extrapolation der Trajektorien (T0,T1,...,TN) anhand eines Systemmodells des technischen Systems (TS) erfolgt.

10. Verfahren nach einem der vorhergehenden Ansprüche, **dadurch gekennzeichnet,**
**dass** ein Betriebsparameter und/oder Umgebungsparameter des technischen Systems (TS) erfasst wird, und
**dass** die Extrapolation der Trajektorien (T0,T1,...,TN) abhängig von dem erfassten Betriebsparameter und/oder Umgebungsparameter erfolgt.

11. Verfahren nach einem der vorhergehenden Ansprüche, **dadurch gekennzeichnet, dass**
die Extrapolation einer jeweiligen Trajektorie (T0,T1,...,TN) bis zu einer Extrapolationsgrenze erfolgt, die abhängig von einem erfassten Betriebsparameter und/oder Umgebungsparameter dynamisch ermittelt wird.

12. Verfahren nach Anspruch 11, **dadurch gekennzeichnet, dass** die Extrapolationsgrenze derart ermittelt wird, dass das technische System (TS) innerhalb der Extrapolationsgrenze in einen sicheren Systemzustand steuerbar ist.

13. Assistenzsystem (AS) zum Steuern eines technischen Systems (TS), eingerichtet zum Ausführen eines Verfahrens nach einem der vorhergehenden Ansprüche.

14. Computerprogrammprodukt umfassend Befehle, die bei der Ausführung des Verfahrens nach einem der Ansprüche 1 -12 durch ein Assistenzsystem nach Anspruch 13 bewirken, dass das Assistenzsystem das Verfahren nach Anspruch 1 - 12 ausführt.

15. Computerlesbares Speichermedium mit einem Computerprogrammprodukt nach Anspruch 14.

## Claims

1. Method for an assistance system (AS) for controlling a technical system (TS),
a) a user manipulated variable (BS) for controlling the technical system (TS) being read in,
b) a multiplicity of manipulated variable variants (SV1, ..., SVN) of the user manipulated variable (BS) being generated,
c) a respective trajectory (T0, T1, ..., TN) of the technical system (TS) being extrapolated respectively for controlling the technical system by means of the user manipulated variable (BS) and for control by means of a respective manipulated variable variant (SV1, ..., SVN),
d) a permissibility of the extrapolated trajectories (T0, T1, ..., TN) being assessed,
e) a respective distance between a respective manipulated variable variant (SV1, ..., SVN) and the user manipulated variable (BS) being determined,
f) the user manipulated variable (BS) being selected as the control signal (SIG) if the trajectory (T0) extrapolated for the user manipulated variable (BS) is assessed to be permissible, and otherwise
a manipulated variable variant being selected from the manipulated variable variants with an extrapolated trajectory assessed to be permissible as the control signal (SIG), a manipulated variable variant with a shorter distance preferably being selected,
g) the control signal (SUG) for controlling the technical system (TS) being output, and
h) the generation of the manipulated variable variants (SV1, ..., SVN), the temporal extrapolation of the trajectories (T0, T1, ..., TN), the assessment of the permissibility of the trajectories (T0, T1, ..., TN), the determination of the distances and/or the selection of the control signal (SIG) being carried out continuously.

2. Method according to Claim 1, **characterized in that** a manipulated variable variant with a minimum distance is selected from the manipulated variable variants with an extrapolated trajectory assessed to be permissible as the control signal (SIG).

3. Method according to one of the preceding claims, **characterized in that**
a predefined distance metric (M) is used to determine the distance between a manipulated variable variant (SV1, ..., SVN) and the user manipulated variable (BS).

4. Method according to Claim 3, **characterized in that** the manipulated variable variants (SV1, ..., SVN) are generated in a range around the user manipulated variable (BS) determined by the distance metric (M).

5. Method according to Claim 4, **characterized in that** the manipulated variable variants (SV1, ..., SVN) are selected within the predefined range by means of a random process.

6. Method according to one of the preceding claims, **characterized in that**
time-dependent functions are generated as manipulated variable variants (SV1, ..., SVN) .

7. Method according to one of the preceding claims, **characterized in that**
the manipulated variable variants (SV1, ..., SVN) are selected from a database containing frequent control patterns.

8. Method according to one of the preceding claims, **characterized in that**
a number of the manipulated variable variants (SV1, ..., SVN) to be generated is determined on the basis of a currently available computing power.

9. Method according to one of the preceding claims, **characterized in that**
the trajectories (T0, T1, ..., TN) are extrapolated on the basis of a system model of the technical system (TS).

10. Method according to one of the preceding claims, **characterized in that**
an operating parameter and/or an environmental parameter of the technical system (TS) is/are recorded, and
**in that** the trajectories (T0, T1, ..., TN) are extrapolated on the basis of the recorded operating parameter and/or environmental parameter.

11. Method according to one of the preceding claims, **characterized in that**
a respective trajectory (T0, T1, ..., TN) is extrapolated up to an extrapolation limit which is dynamically determined on the basis of a recorded operating parameter and/or environmental parameter.

12. Method according to Claim 11, **characterized in that** the extrapolation limit is determined in such a manner that the technical system (TS) can be controlled into a safe system state within the extrapolation limit.

13. Assistance system (AS) for controlling a technical system (TS), set up to carry out a method according to one of the preceding claims.

14. Computer program product comprising instructions which, when the method according to one of Claims 1-12 is carried out by an assistance system according to Claim 13, cause the assistance system to carry out the method according to Claims 1-12.

15. Computer-readable storage medium having a computer program product according to Claim 14.

## Revendications

1. Procédé pour un système d'assistance (AS) destiné à la commande d'un système technique (TS),
dans lequel
a) une grandeur de réglage d'utilisateur (BS) destinée à la commande du système technique (TS) est lue,
b) une pluralité de variantes de grandeur de réglage (SV1, ..., SVN) de la grandeur de réglage d'utilisateur (BS) sont générées,
c) une trajectoire (T0, T1, ..., TN) respective du système technique (TS) est extrapolée respectivement pour une commande du système technique par le biais de la grandeur de réglage d'utilisateur (BS) ainsi que pour une commande par le biais d'une variante de grandeur de réglage (SV1, ..., SVN) respective,
d) une admissibilité des trajectoires (T0, T1, ..., TN) extrapolées est évaluée,
e) un écart respectif d'une variante de grandeur de réglage (SV1, ..., SVN) respective par rapport à la grandeur de réglage d'utilisateur (BS) est déterminé,
f) la grandeur de réglage d'utilisateur (BS) est sélectionnée en tant que signal de commande (SIG) dans le cas où la trajectoire (T0) extrapolée pour la grandeur de réglage d'utilisateur (BS) est évaluée comme étant admissible, et sinon
à partir des variantes de grandeur de réglage avec en tant que trajectoire extrapolée évaluée comme étant admissible une variante de grandeur de réglage est sélectionnée en tant que signal de commande (SIG), dans lequel une variante de grandeur de réglage avec un écart plus petit est de préférence sélectionnée,
g) le signal de commande (SUG) destiné à la commande du système technique (TS) est transmis en sortie, et
h) la génération des variantes de grandeur de réglage (SV1, ..., SVN), l'extrapolation temporelle des trajectoires (T0, T1, ..., TN), l'évaluation de l'admissibilité des trajectoires (T0, T1, ..., TN), la détermination des écarts et/ou la sélection du signal de commande (SIG) se font de manière continue.

2. Procédé selon la revendication 1, **caractérisé en ce que**, à partir des variantes de grandeur de réglage avec en tant que trajectoire extrapolée évaluée comme étant admissible une variante de grandeur de réglage avec un écart minimal est sélectionnée en tant que signal de commande (SIG).

3. Procédé selon l'une quelconque des revendications précédentes, **caractérisé en ce que** pour la détermination de l'écart entre une variante de grandeur de réglage (SV1, ..., SVN) et la grandeur de réglage d'utilisateur (BS) une métrique d'écart (M) prédéfinie est utilisée.

4. Procédé selon la revendication 3, **caractérisé en ce que** les variantes de grandeur de réglage (SV1, ..., SVN) sont générées dans une plage déterminée par le biais de la métrique d'écart (M) autour de la grandeur de réglage d'utilisateur (BS) .

5. Procédé selon la revendication 4, **caractérisé en ce que** les variantes de grandeur de réglage (SV1, ..., SVN) sont sélectionnées à l'intérieur de la plage prédéterminée au moyen d'un processus aléatoire.

6. Procédé selon l'une quelconque des revendications précédentes, **caractérisé en ce que**, en tant que variantes de grandeur de réglage (SV1, ..., SVN), des fonctions dépendantes du temps sont générées.

7. Procédé selon l'une quelconque des revendications précédentes, **caractérisé en ce que** les variantes de grandeur de réglage (SV1, ..., SVN) sont sélectionnées à partir d'une base de données avec des modèles de commande fréquents.

8. Procédé selon l'une quelconque des revendications précédentes, **caractérisé en ce qu'**un nombre des variantes de grandeur de réglage (SV1, ..., SVN) à générer est déterminé en fonction d'une puissance de calcul actuellement disponible.

9. Procédé selon l'une quelconque des revendications précédentes, **caractérisé en ce que** l'extrapolation des trajectoires (T0, T1, ..., TN) se produit à l'aide d'un modèle de système du système technique (TS).

10. Procédé selon l'une quelconque des revendications précédentes, **caractérisé en ce qu'**un paramètre de fonctionnement et/ou un paramètre d'environnement du système technique (TS) sont détectés, et **en ce que** l'extrapolation des trajectoires (T0, T1, ..., TN) se produit en fonction du paramètre de fonctionnement et/ou du paramètre d'environnement détecté.

11. Procédé selon l'une quelconque des revendications précédentes, **caractérisé en ce que** l'extrapolation d'une trajectoire (T0, T1, ..., TN) respective se produit jusqu'à une limite d'extrapolation qui est déterminée de manière dynamique en fonction d'un paramètre de fonctionnement et/ou d'un paramètre d'environnement détecté.

12. Procédé selon la revendication 11, **caractérisé en ce que** la limite d'extrapolation est déterminée de telle sorte que le système technique (TS) est apte à être commandé à l'intérieur de la limite d'extrapolation dans un état de système sécurisé.

13. Système d'assistance (AS) destiné à la commande d'un système technique (TS), établi pour la réalisation d'un procédé selon l'une quelconque des revendications précédentes.

14. Produit de programme d'ordinateur comprenant des instructions qui, lors de la réalisation du procédé selon l'une quelconque des revendications 1 à 12 par le biais d'un système d'assistance selon la revendication 13 amènent le système d'assistance à réaliser le procédé selon les revendications 1 à 12.

15. Support de stockage lisible par ordinateur avec un produit de programme d'ordinateur selon la revendication 14.
